(19) Europäisches Patentamt
European Patent Office
Office européen des brevets

(11) Publication number : **0 451 879 B1**

(12) **EUROPEAN PATENT SPECIFICATION**

(45) Date of publication of patent specification : **05.07.95 Bulletin 95/27**

(51) Int. Cl.$^6$ : **H04N 7/24,** H04N 11/04

(21) Application number : **91108920.9**

(22) Date of filing : **06.09.84**

(54) **Vector quantizer.**

(30) Priority : **06.09.83 JP 163617/83**
**09.01.84 JP 1669/84**
**18.01.84 JP 6473/84**
**30.01.84 JP 14606/84**
**30.01.84 JP 14607/84**
**02.02.84 JP 17281/84**
**23.02.84 JP 32918/84**
**15.03.84 JP 49901/84**

(43) Date of publication of application : **16.10.91 Bulletin 91/42**

(60) Publication number of the earlier application in accordance with Art. 76 EPC : **0 137 314**

(45) Publication of the grant of the patent : **05.07.95 Bulletin 95/27**

(84) Designated Contracting States : **DE FR GB NL**

(56) References cited :
**EP-A- 0 097 858**
**GB-A- 2 003 001**
**US-A- 3 720 780**
**ELECTRONICS LETTERS vol. 18, no. 23, November 1982, ENAGE GB pages 1005 - 1006 T.MURAKAMI ET AL. 'Vector Quantiser of Video Signals.'**

(73) Proprietor : **MITSUBISHI DENKI KABUSHIKI KAISHA**
**2-3, Marunouchi 2-chome**
**Chiyoda-ku**
**Tokyo 100 (JP)**

(72) Inventor : **Murakami, Tokumichi, c/o MITSUBISHI DENKI K.K.**
**Information Systems,**
**and Electronics Devel. Lab.**
**325, Kamimachiya, Kamakura-shi, Kanagawa (JP)**
Inventor : **Asai, Kohtaro, c/o MITSUBISHI DENKI K.K.**
**Information Systems,**
**and Electronics Devel. Lab.**
**325, Kamimachiya, Kamakura-shi, Kanagawa (JP)**
Inventor : **Ito, Atsushi, c/o MITSUBISHI DENKI K.K.**
**Information Systems,**
**and Electronics Devel. Lab.**
**325, Kamimachiya, Kamakura-shi, Kanagawa (JP)**

(74) Representative : **Eisenführ, Speiser & Partner**
**Martinistrasse 24**
**D-28195 Bremen (DE)**

**EP 0 451 879 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

Field of the Invention

The present invention relates to a vector quantizer for quantizing the vector of image information and audio information.

Description of the Prior Art

The prior art relating to such a vector quantizer is described in literatures such as: Y. Linde, A. Buzo and R.M. Gray, "An Algorithm for Vector Quantizer", IEEE Trans., Com-28, pp. 84 - 95 (1980); A. Gersho, "On the Structure of Vector Quantizers", IEEE Trans., IT-82, pp. 157 - 166 (1982); A. Buzo and A.H. Gray, Jr, "Speech Coding Based Upon Vector Quantization", IEEE Trans., ASSP-28 (1980); B.H. Juang and A.H. Gray, Jr., "Multiple Stage Quantization for Speech Coding", Proc. Intl. Conf. on A.S.S.P., pp. 597 - 600, Paris (1982); and A. Gersho and V. Cuperman, "Vector Quantization: A Pattern Matching Technique for Speech Coding", IEEE, COMMUNICATION MAGAZINE, pp. 15 - 21, Dec. (1983).

The U.K. patent application GB-A-20 03 001 discloses an apparatus for coding and decoding digital television signals. The coding apparatus predicts the values of digital signals representing the luminance of picture elements from the previous element according to whether motion is detected or not. The coding is carried out by substracting the predicted value from the actual value and subsequent quantization. The decoding apparatus generates prediction signals dependent on previous elements and adds the prediction signals to the encoded signal.

A vector quantizer as shown in Fig. 3, which will be described later, is known in addition to those vector quantizers of the prior art. The principle of the vector quantizer will be described prior to the description of the vector quantizer of Fig. 3. Referring to Fig. 1, assuming that an object has moved on the screen during the period from a frame No. f-1 to a frame No. f from a Position A to a position B, then a block $S^f(R)$ including a plurality of the lattice samples of an image signal around a position vector R in the frame No. f becomes approximately equal to the block $S^{f-1}(R-r)$ of the image signal at a position determined by subtracting a movement vector r from a position vector R in the frame No. f-1. As shown in Fig. 2, when the position vector R = (m, n) and the movement vector r = (u, v), $S^f(R) \fallingdotseq S^{f-1}(R-r)$. Suppose the image signal at R = (m, n) is S(M, n) and $S^f(R)$ = [S(m-2, n-2), ..., S(m, n), ..., S(m+2, n+2)], the degree of analogy L(n, v) between $S^f(R)$ and $S^{f-1}(R-r)$ is defined as the block unit matching scale of 5x5 picture element as follows;

$$L(u, v) = \sum_g \sum_h |S^f(m+g, n+h) - S^{f-1}(m+g-u, n+h-v)|$$

In this state, the movement vector r is expressed by

$$r = [u, v \,|\min_{u,v} L(u, v)]$$

That is, the degree of analogy L(u, v) of $S^f(R)$ and $S^{f-1}(R-r)$ is expected to be minimized by block matching. Therefore, in introducing movement compensation into inter-frame prediction coding, the use of a block which minimizes L(u, v), extracted from image signal blocks of the frame No. f-1, as a prediction signal in giving the block $S^f(R)$ of the image signal of the position of R in the frame No. f to an inter-frame prediction encoder, the power of prediction error signal will be reduced to the least and encoding efficiency is improved.

Referring to Fig. 3 showing an example of the constitution of a conventional vector quantizer of this kind, there are shown an A/D converter 1, a raster/block scan converter 2, a frame memory 3, a movement vector detector 4, a variable delay circuit 5, a subtractor 6, a scalar quantizer 7, an adder 8 and a variable-length encoder 9.

The manner of operation of this vector quantizer will be described hereinafter. First the A/D converter 1 converts an analog picture input signal 101 into the corresponding digital signal and gives a digital picture signal sequence 102 according to the sequence of raster scanning. The output procedure of the raster scan digital

picture signal sequence 102 on the time series of the picture signal is converted into block scaning by the raster/block scan converter 2, and thereby the digital picture signal sequence is converted into a block scan picture input signal 103 arranged sequentially in lattice block units (the interior of the block is raster scanning) from the top to the bottom and from the left to the right on the screen. A regenerative picture signal 104 of one frame before regenerated according to inter-frame DPCM loop is read from the frame memory 3. The movement vector detector 4 executes the block matching of the present block scan picture input signal 103, the regenerative picture signal 104 of one frame before and the picture signal and gives the movement vector r = (u, v) of the picture signal 104 of one frame before which minimizes the degree of analogy. The movement vectors (u, v) corresponds to the horizontal and the vertical shifts of the picture element of the block of the regenerative picture signal 104 of one frame before. On the basis of the movement vector 104, the variable delay circuit 5 block-shifts the one-frame preceding regenerative picture signal 104 by the movement vector and gives a predictive picture signal 106 which is the closest to the present block scan picture input signal 103. The subtractor 6 calculates the differential between the block scan picture input signal 103 and the predictive picture signal 106 and gives a predictive error picture signal 107 to the scalar quantizer 7. The scalar quantizer 7 converts the predictive error picture signal 106 into a predictive error quantization picture signal 108 reduced in quantization level at picture element unit. The adder 8 adds the predictive error quantization picture signal 108 and the predictive picture signal 106 and gives a regenerative picture signal 109 including scalar quantization error to the frame memory 3. The frame memory performs delaying operation to delay the present regenerative picture signal 109 by one frame. In the movement compensation inter-frame DPCM loop, supposing that the picture input signal 103 is $S^f(m, n)$, the predictive picture signal 106 is $p^f(m, n)$, the predictive error signal 107 is $\varepsilon^f(m, n)$, scalar quantization noise is $Q_s^f(m, n)$, the predictive error quantization signal 108 is $\hat{S}^f(m, n)$ and the one-frame preceding regenerative picture signal 104 is $\hat{S}^{f-1}(m, n)$, then

$$\varepsilon^f(m, n) = S^f(m, n) - P^f(m, n),$$

$$\hat{\varepsilon}^f(m, n) = \varepsilon^f(m, n) + Q_s^f(m, n),$$

$$\hat{S}^f(m, n) = P^f(m, n) + \hat{\varepsilon}^f(m, n) = S^f(m, n) + Q_s^f(m, n),$$

and

$$\hat{S}^{f-1}(m, n) = \hat{S}^f(m, n) \cdot Z^{-f}.$$

where $Z^{-f}$ denotes delay corresponding to one frame.

$P^f(m, n)$ is expressed through movement compensation on the basis of $\hat{S}^{f-1}(m, n)$ by the following formula:

$$P^f(m, n) = \hat{S}^{f-1}(m - u, n - v).$$

Fig. 5 shows an example of the constitution of the movement vector detector 4 for carrying out movement compensation.

Referring to Fig. 5, there are shown an analogy degree computation circuit 10, a movement region line memory 11, a line memory control circuit 12, an analogy degree comparator 13 and a movement vector latch 14.

The movement vector detector 4 gives $S^f(R)$ produced by blocking a plurality of the sequences of the present picture input signal 103 to the analogy degree computation circuit 10. At this moment, the lines of the one-frame preceding regenerative picture signal 104 stored in the frame memory 3 corresponding to the tracking range of the movement region of $S^f(R)$ are stored in the movement region line memory 11. The line memory control circuit 12 sends sequentially the blocks adjacent to a plurality of blocks $S^{f-1}(R+r)$ of the one-frame preceding regenerative image signal 104 to the analogy degree computation circuit 10. The analogy degree computation circuit 10 computes the analogy degree L(u, v) of the blocks in the neighborhood of $S^f(R)$ and $S^{f-1}(R-r)$ and the analogy degree comparator 13 determines the minimum analogy degree

$$\min_{u,v} L(u, v).$$

Since u and v corresponds to the horizontal and the vertical address shifts of blocks in the movement region line memory 11 respectively, the analogy degree comparator 13 gives a movement detection strobing signal 111 to the movement vector latch 14 when the analogy degree is minimized, to take in a movement vector address 112. The movement vector latch 14 sends the displacement r of $S^{f-1}(R-r)$ relative to $S^f(R)$ minimizing the analogy degree L(u, v) as a movement vector 105 to the variable delay circuit 5 and the variable-length encoder 9 of Fig. 3.

The variable-length encoder 9 of Fig. 3 processes the movement vector 105 and the predictive error quantization signal 108 through variable-length encoding to reduce the amount of information of the picture signal. The variable-length encoding enables the transmission of the movement compensation inter-frame encoding

output 110 at a low bit rate.

Since the conventional movement compensation inter-frame encoder is constituted as described hereinbefore, the movement compensation operation is performed for every block and the inter-frame DPCM operation is performed for every picture element. Accordingly, the identification between the minute variation of the screen and noise is impossible and the variable-length encoding of the movement vector and the predictive error quantization signal is difficult. Furthermore, since the control of the variation of the quantity of produced information resulting from the variation of the movement scalar is difficult, a large loss is inevitable when transmission is carried out through a transmission channel of a fixed transmission capacity. Still further, encoding the predictive error quantization signal for every picture element is inefficient. Since the movement compensation system is liable to be affected by transmission channel error, the frame memory needs to be reset or repeated transmission when transmission channel error occurs, which requires long resetting time.

## SUMMARY OF THE INVENTION

Object of the present invention is to provide a picture signal vector quantizer of high coding efficiency, designed to vector-quantize a picture signal by blocking the difference between the picture signal and the picture element of the preceding neighbor frame corresponding to the same position on the screen over the channels after sampling the picture signal in channels and digitizing the picture signal, and capable of transmitting a plurality of channels through a single channel by deciding, on the basis of the inter-frame difference of the neighbor picture element which has already been coded and transmitted and the inter-frame difference of the picture element to be transmitted, whether or not the present picture element has made a significant change with respect to the preceding neighbor frame, by encoding and transmitting the information when the present picture element has not made any significant change and improving the efficiency of vector quantization by normalizing the inter-frame difference of the picture element to be transmitted by the use of the inter-frame difference of the neighbor picture element when the present picture element has made a significant change.

## BRIEF DESCRIPTION OF THE DRAWINGS

Figure 1 is an explanatory pictorial view for facilitating the understanding of the definition of the movement of picture signals between frames by a movement vector;
Figure 2 is an explanatory view showing the relation between the movement vector and the arrangement of the picture elements of a moved block;
Figure 3 is a block diagram showing a conventional movement compensation inter-frame encoder;
Figure 4 is a graph showing the input-output characteristics of the scalar quantizer employed in the encoder of Fig. 3;
Figure 5 is a block diagram of the movement vector detector employed in the encoder of Fig. 3;
Figure 6 is a block diagram showing the constitution of a picture signal encoder;
Figure 7 is an explanatory representation showing the arrangement of sample picture elements on the scene;
Figure 8 is an explanatory representation showing the arrangement of picture elements in successive frames;
Figure 9 is a block diagram showing the constitution of the encoder of a picture signal encoder embodying the present invention;
Figure 10 is a block diagram showing the constitution of the movement detection normalization vector quantization encoder of Fig. 9;
Figure 11 is a block diagram showing the constitution of the decoder of a picture signal encoder embodying the present invention;
Figure 12 is a block diagram showing the constitution of the movement detection normalization vector quantization decoder of Fig. 11; and
Figure 13 is a graphical representation explaining the mapping relation between the input vector and the output vector in three-dimensional signal space in vector quantization.

## DESCRIPTION OF THE PREFERRED EMBODIMENTS

An embodiment of the present invention will be described hereinafter.

This embodiment is a vector quantizer for coding and decoding picture signal, capable of compressing data for the digital transmission of picture signals having a plurality of channels at a low bit rate.

Prior to the concrete description of the embodiment, the basic constitution of this vector quantizer will be

described in connection with Fig. 6 . In Fig. 6 , indicated at 801 is an analog picture signal, at 802 is an A/D converter to digitize an analog signal, at 803 is a digitized picture signal sequence, at 804 is a subtractor to calculate a predictive error for the prediction coding of signals, at 805 is a predictive signal, at 806 is a frame memory to give the predictive signal, at 807 is a predictive error signal given by the subtractor 804, at 808 is a quantizer to assign the predictive error to a predetermined level, at 809 is a quantized predictive error signal, at 810 is an adder to add the quantized predictive error and a predictive value, at 811 is a regenerated picture signal sequence, at 812 is a D/A converter and at 813 is a regenerated analog picture signal. Fig. 6 shows a vector quantizer for vector-quantizing picture signals having three channels, for example, R, G and B color pictures.

The actions of vector quantizer will be described hereunder. Referring to Fig. 7, analog picture signals 801 are sampled in a square lattice for each channel and processed through A/D conversion process to convert into a digital signal sequence $S_R(m, n)$ (m = 1, 2, ..., M; n = 1, 2, ..., N; R = 1, 2 and 3; m and n indicate positions on a scene; R indicates channels). Since the data rate of the picture signal sequence $S_R(m, n)$ digitized by the A/D converter 802 is excessively high for PCM transmission, the picture signal sequence $S_R(m, n)$ is processed through data compression by the use of the correlation between the picture elements at the same position in different successive frames. Suppose, as shown in Fig. 8, the signal in a frame No. f is expressed by $S_R^f(m, n)$ and indicated at 803 is this signal $S_R^f(m, n)$, at 805 is a predictive signal $P_R^f(m, n)$, at 807 is a predictive error signal $\varepsilon_R^f(m, n)$, at 809 is a quantized predictive error signal $\hat{\varepsilon}_R^f(m, n)$, at 811 is a regenerated picture signal $\hat{S}_R^f(m, n)$ and $q_N$ is a quantization noise generated when the quantizer 808 reduces the quantization level. Then, a signal 809 of a reduced number of quantization levels is formed through a process expressed by:

$$\hat{\varepsilon}_R^f(m, n) = S_R^f(m, n) - P_R^f(m, n) + q_N$$

$$\hat{S}_R^f(m, n) = \hat{\varepsilon}_R^f(m, n) + P_R^f(m, n) = S_R^f(m, n) + q_N$$

$$P_R^f(m, n) = S_R^{f-1}(m, n)$$

Thus the signal 809 of a reduced number of quantization levels can be obtained by quantizing the predictive error signal employing the picture element signal of the one-frame cycle preceding frame by the use of the high correlation between the picture elements at the same spatial position in different successive frames and thereby low-bit-rate transmission is possible.

In the reception section, the quantized predictive error signal 809 is received and decoded to provide a regenerated picture signal 811. This decoding operation is expressed by:

$$\hat{S}_R^f(m, n) = \hat{\varepsilon}_R^f(m, n) + P_R^f(m, n) = S_R^f(m, n) + q_N$$

$$P_R^f(m, n) = \hat{S}_R^{f-1}(m, n)$$

The regenerated picture signal is converted into an analog signal by the D/A converter 812 to regenerate an analog picture signal 813. Those coding and decoding processes are implemented individually for each channel.

Based on the principle as described above, this constitution needs one transmission line for each channel and the coding efficiency is not high in proportion to the scale of the device.

This embodiment is constituted in view of those disadvantages of the above-mentioned constitution. This embodiment will be described hereinafter. Fig. 8 shows an encoder employed in a picture signal encoder embodying the present invention. Descriptions will be made with regard to vector quantization having three channels corresponding to dimensions respectively. In Fig. 9, indicated at 801 is an analog picture signal, at 802 is an A/D converter for digitizing the analog picture signal, at 803 is a digitized picture signal sequence, at 804 is a subtractor to calculate an inter-frame difference for inter-frame predictive coding, at 805 is a predictive signal, at 806 is a frame memory which gives the predictive signal, at 807 is an inter-frame difference provided by the subtractor 804, at 809 is a quantized inter-frame difference, at 810 is an adder to add the quantized inter-frame difference and the predictive value, at 811 is a regenerated signal sequence, at 814 is a movement detection normalized vector quantization encoder capable of deciding for every picture element whether or not significant change has occurred with respect to the preceding frame, normalizing the predictive error signal (inter-frame difference) when significant change occurred and vector-quantizing three channels collectively, and at 815 is a coded signal indicating the index of the vector and movement detection information. Fig. 10 shows the detail of the constitution of the movement detection normalizing vector quantization encoder 814. In Fig. 10, indicated at 816 is a memory which gives the inter-frame difference of the adjacent picture element, at 817 is the inter-frame difference of the adjacent picture element, at 818 is an amplitude calculator for calculating the normalization constant of the inter-frame difference of the picture element to be transmitted, on the basis of the inter-frame difference of the adjacent picture element, at 819 is a normalization constant given by the amplitude calculator 818, at 820 is a movement detector to decide, on the basis of the inter-frame difference 807 of the picture element to be transmitted and the normalization constant, whether or not the present

picture element has made significant movement with respect to the preceding frame, at 821 is a divider which normalizes the inter-frame difference, at 822 is a normalized inter-frame difference signal, at 823 is a signal indicating the result of the decision made by the movement detector 820, at 824 is a vector quantization encoder for vector-quantizing the signal 822, at 825 is a vector quantization decoder which gives an output vector according to the coded signal 815, at 826 is an output vector, and at 827 is a multiplier which multiplies the output vector 826 by the normalization constant 819. Fig. 11 shows the decoding section of this picture signal encoder embodying the present invention. In Fig. 11, indicated at 828 is a normalized vector quantization decoder which receives the coded signal 815 and gives a quantized inter-frame difference 809, at 812 is a D/A converter and at 813 is a regenerated analog picture signal. Fig. 12, shows the detail of the constitution of the normalized vector quantizer 828.

The actions of the picture signal encoder embodying the present invention will be described hereinafter. As shown in Fig. 7, the analog picture signals 801 are sampled in a square lattice for every channel and are digitized to be converted into digital signal sequences $S_R(m, n)$ (m = 1, 2, ..., M; n = 1, 2, ..., N; R = 1, 2 and 3; m and n indicate a position of the scene, R indicates channels). Suppose, as shown in Fig. 8, the signal in a frame No. f is expressed by $S_R^f(m, n)$. The subtractor 804 calculates the inter-frame differential signal $\varepsilon_R^f(m, n)$ through an operation expressed by:

$$\varepsilon_R^f(m, n) = S_R^f(m, n) - \hat{S}_R^{f-1}(m, n)$$

where $S_R^{f-1}(m, n)$ is the signal 805 of the one-frame cycle preceding frame, $\varepsilon_R^f(m, n)$ is the inter-frame differential signal 807 and $\hat{\varepsilon}_R^f(m, n)$ is the quantized inter-frame differential signal 809. The memory 816 and the amplitude calculator 818 compose, for example, a picture element delaying and magnitude operator. The normalization constant 819 is expressed by $|\hat{\varepsilon}_R^f(m-1, n)|$. This corresponds to the magnitude of the inter-frame differential of the adjacent frame. The movement detector 820 operates the inter-frame difference $\varepsilon_R^f(m, n)$ 807 of the picture element to be transmitted and the normalization constant 819 and compares the result of operation with a predetermined threshold. If the result is smaller than the threshold for all the channels, it is decided that significant change (movement) has not occurred, where as if the result for even one channel is greater than the threshold, it is decided that significant change (movement) has occurred. The inter-frame difference $\varepsilon_F^f(m, n)$ is normalized by the normalization constant $|\hat{\varepsilon}_R^f(m-1, n)|$ 819. The normalized signal $x_R^f(m, n)$ is given by:

$$x_R^f(m, n) = \varepsilon_R^f(m, n)/|\hat{\varepsilon}_R^f(m - 1, n)|$$

Since the picture element to be transmitted and the adjacent picture element are highly correlated, the inter-frame difference of the picture element to be transmitted and the inter-frame difference of the adjacent frame also are highly correlated. Accordingly, the definition of the normalization constant on the basis of the inter-frame difference of the adjacent picture element distributes the normalized signals around a fixed value, and hence the coding performance of the vector quantizer is improved. The principle of vector quantization will be described briefly hereinafter. K pieces of information source input signal sequences are blocked to form an input vector $\underline{X} = [x_1, x_2, ..., x_k]$. Suppose a set of N representative points (output vectors) in K-dimensional signal space $R^k(\underline{X} \in R^k)$ is expressed by $Y = [\underline{y}_1, \underline{y}_2, ..., \underline{y}_N]$. Vector quantization of is a mapping of an input vector into an output vector $\underline{y}_i$ lying at the shortest distance from the input vector. Suppose the distance between the input and the output vectors in K-dimensional signal space is expressed by $d(\underline{X}, \underline{y}_i)$. Then,

$$d(\underline{X}, \underline{y}_i) = \{\sum_{R=1}^{k} (x_R - y_{ik})^2\}^{\frac{1}{2}}$$

$$\underline{X} \rightarrow \underline{y}_i \text{ if } d(\underline{X}, \underline{y}_i) < d(\underline{X}, y_j) \text{ for all } j\ (i \neq j)$$

In practice, the indices i (i = 1, 2, ..., N) of the output vector set $Y = [\underline{y}_1, \underline{y}_2, ..., \underline{y}_N]$ are transmitted. The reception section reads the output vectors $\underline{y}_i$ from the output vector set Y of the transmission section according to the transmitted indices. Fig. 13 shows the relation between the input vector $\underline{X}$ and the output vectors. Vector quantization is based on the principle described hereinbefore, therefore, the function of vector quantization is enhanced by preparing a set of output vectors corresponding to the distribution of the normalized input vectors. Furthermore, the vector quantization encoder 824 employed herein codes and transmits information when the movement detector 820 gives a decision signal 823 indicating "significant change (movement). Generally, successive animated pictures have many parts which do not move and the pictures are consecutive, therefore, coding efficiency can be improved by run-length coding. The normalized signal $x_R^f(m, n)$ constitutes a three-dimensional vector by collecting the channels (R = 1, 2, 3), and the vector quantization decoder 825 reads, according to the coded signal 815, a zero vector when a signal indicating "no movement" is given and reads

output vectors when an index signal is given to give output vectors 826. The multiplier 827 multiplies the output vectors by the normalization constant 819 and gives an inter-frame differential signal 809. If the dimension of the output vectors $\underline{y}_i$ is expressed by $y^f_{iR}(m, n)$ (R = 1, 2, 3),

$$\begin{aligned} \hat{\varepsilon}^f_R(m, n) &= |\hat{\varepsilon}^f_R(m-1, n) \cdot y^f_{iR}(m, n) \\ &= \hat{\varepsilon}^f_R(m-1, n)\, x^f_R(m, n) + q_N \\ &= \varepsilon^f_R(m, n) + q_N \end{aligned}$$

$$\hat{\varepsilon}^f_R(m, n) = S^f_R(m, n) - \hat{S}^{f-1}_R(m, n) + q_N$$

$$\hat{S}^f_R(m, n) = \hat{\varepsilon}^f_R(m, n) + \hat{S}^{f-1}_R(m, n) = S^f_R(m, n) + q_N$$

Low-bit-rate transmission is attained by transmitting the index signal formed by vector-quantizing the inter-frame differential signal through the operation expressed by formulas shown above. $q_N$ is a noise generated by vector quantization. In the decoding section, similarly to the operation in the coding section, the zero vector or the output vector given by the vector quantization decoder is multiplied by the normalization constant to decode the regenerated inter-frame differential signal. Then, the regenerated picture signal 811 is obtained through the operation expressed by:

$$\hat{S}^f_R(m, n) = \hat{\varepsilon}^f_R(m, n) + \hat{S}^{f-1}_R(m, n) = S^f_R(m, n) + q_N$$

and the D/A converter 812 gives the regenerated analog picture signal 813.

Thus the picture signal encoder of this embodiment normalizes the inter-frame difference of picture signals having a plurality of channels by the inter-frame difference of the adjacent picture element which has been transmitted and vector quantization is implemented by blocking over the channels only when a decision is made that the present frame has made a significant change with respect to the preceding frame to attain the transmission of a plurality of channels through a single transmission line, and thereby highly efficient picture signal coding is achieved.

## Claims

1. A vector quantizer comprising:
   a frame memory (806) capable of storing at all times the input color picture signals of at least one frame of color picture signals consisting of three-channel components, for example, red, green and blue color channels or, brightness and two color channels, for individual channels;
   a differential arithmetic unit (804) which reads, when new picture signals are given thereto, signals located at the same position as that of the input picture signals in the one-frame cycle preceding scene from the frame memory (806) and calculates inter-frame difference signals;
   characterized by a vector quantization encoder (814) which vector-quantizes the inter-frame difference signals, collectively over all channels;
   a vector quantization decoder (828) which decodes the inter-frame difference signal given by the vector quantization encoder (814) to provide regenerated inter-frame difference signals; and
   an adder (810) which reads signals of a frame preceding by at least one-frame cycle from the frame memory (806) and adds the same signals and the decoded inter-frame difference signal,
   wherein said vector quantization encoder (814) and said vector quantization decoder (828) have memories (816) capable of storing the decoded inter-frame difference of adjacent picture elements; and amplitude calculators (818) for calculating amplitudes as normalisation constants of the interframe difference of picture elements to be transmitted by using the inter-frame difference of the adjacent picture elements given by the memories (816);
   said vector quantization encoder (814) has dividers (821) which normalize the inter-frame difference of the picture elements to be transmitted by the amplitudes given by the amplitude calculators (818);
   said vector quantization encoder (814) and said vector quantization decoder (828) has multipliers (827) which multiply the decoded and normalized inter-frame difference by the amplitudes given by the amplitude calculators (818); and
   said vector quantization encoder (814) has a movement detector (820) which decides that the new picture elements have not significantly changed with respect to the corresponding picture elements of the one-frame cycle preceding frame when the inter-frame difference of the adjacent picture elements given by the memories (814) and the inter-frame difference of the new picture elements are close to zero, and decides that the new picture elements have significantly changed with respect to the corresponding adjacent picture elements of the one-frame cycle preceding frame when the inter-frame difference of the adjacent picture elements and the inter-frame difference of the new picture elements are not close to zero and

subjects the inter-frame difference of the new picture elements to vector quantization when the movement detector decides that the new picture elements have significantly changed.

## Patentansprüche

1. Vektorquantisiervorrichtung mit:
einem Bildspeicher (806) zur Speicherung zu jeder Zeit der Eingangsfarbbildsignale mindestens eines Bildes von Farbbildsignalen, die aus Dreikanalkomponenten bestehen, beispielsweise roten, grünen und blauen Farbkanälen oder Leuchtdichte und zwei Farbkanälen, für einzelne Kanäle;
einer Differenz-Recheneinheit (804), die bei Eingabe von neuen Bildsignalen in diese an demselben Ort wie dem der Eingangsbildsignale in der um einen Bildzyklus vorhergehenden Szene befindliche Signale aus dem Bildspeicher (806) ausliest und Zwischenbilddifferenzsignale berechnet;
gekennzeichnet durch einen Vektorquantisierungskodierer (814), der die Zwischenbilddifferenzsignale gemeinsam über alle Kanäle vektorquantisiert;
einen Vektorquantisierungsdekodierer (828), der das vom Vektorquantisierungskodierer (814) abgegebene Zwischenbilddifferenzsignal dekodiert, um regenerierte Zwischenbilddifferenzsignale bereitzustellen;
und einen Addierer (810), der Signale eines um mindestens einen Bildzyklus vorhergehenden Bildes aus dem Bildspeicher (806) ausliest und dieselben Signale und das dekodierte Zwischenbilddifferenzsignal addiert,
wobei der besagte Vektorquantisierungskodierer (814) und der besagte Vektorquantisierungsdekodierer (828) Speicher (816) zur Speicherung der dekodierten Zwischenbilddifferenz der Nachbarbildpunkte und Amplitudenrechner (818) zur Berechnung von Amplituden als Normierungskonstanten der Zwischenbilddifferenz für zu übertragende Bildpunkte durch Verwendung der Zwischenbilddifferenz der von den Speichern (816) abgegebenen Nachbarbildpunkte aufweisen;
der besagte Vektorquantisierungskodierer (814) Teiler (821) aufweist, die die Zwischenbilddifferenz der zu übertragenden Bildpunkte mit den von den Amplitudenrechnern (818) abgegebenen Amplituden normieren;
der besagte Vektorquantisierungskodierer (814) und der besagte Vektorquantisierungsdekodierer (828) Multiplizierer (827) aufweisen, die die dekodierte und normierte Zwischenbilddifferenz mit den von den Amplitudenrechnern (818) abgegebenen Amplituden multiplizieren; und
der besagte Vektorquantisierungskodierer (814) einen Bewegungsdetektor (820) aufweist, der entscheidet, daß sich die neuen Bildpunkte hinsichtlich der entsprechenden Bildpunkte des um einen Bildzyklus vorhergehenden Bildes nicht bedeutend geändert haben, wenn die Zwischenbilddifferenz der von den Speichern (814) abgegebenen Nachbarbildpunkte und die Zwischenbilddifferenz der neuen Bildpunkte annähernd Null sind, und der entscheidet, daß sich die neuen Bildpunkte sich hinsichtlich der entsprechenden Nachbarbildpunkte des um einen Bildzyklus vorhergehenden Bildes geändert haben, wenn die Zwischenbilddifferenz der Nachbarbildpunkte und die Zwischenbilddifferenz der neuen Bildpunkte nicht in der Nähe von Null liegen, und die Zwischenbilddifferenz der neuen Bildpunkte der Vektorquantisierung unterwirft, wenn der Bewegungsdetektor entscheidet, daß sich die neuen Bildpunkte sich bedeutend geändert haben.

## Revendications

1. Quantificateur vectoriel comprenant:
une mémoire de trame (806) capable de mémoriser à tous moments les signaux d'image en couleur d'entrée d'au moins une trame de signaux d'image en couleur composés de composantes de trois canaux, par exemple, des canaux de couleurs rouge, verte et bleue, ou une luminosité et deux canaux de couleur, pour des canaux individuels;
une unité arithmétique différentielle (804) qui lit, lorsque de nouveaux signaux d'image lui sont fournis, des signaux situés à la même position que celle des signaux d'image d'entrée dans la scène en avance d'un cycle de trame délivrés par la mémoire de trame (806) et calcule des signaux de différence inter-trame;
caractérisé par un codeur de quantification vectorielle (814) qui quantifie vectoriellement les signaux de différence inter-trame, de façon collective sur tous les canaux;
un décodeur de quantification vectorielle (828) qui décode le signal de différence inter-trame délivré par le codeur de quantification vectorielle (814) pour fournir des signaux de différence inter-trame

régénérés; et

un additionneur (810) qui lit des signaux d'une trame en avance d'au moins un cycle de trame dans la mémoire de trame (806) et ajoute ces mêmes signaux et le signal de différence inter-trame décodé, dans lequel ledit codeur de quantification vectorielle (814) et ledit décodeur de quantification vectorielle (828) comprennent des mémoires (816) capables de mémoriser la différence inter-trame décodée d'éléments d'image adjacents; et des calculateurs d'amplitude (818) pour calculer des amplitudes en tant que constantes de normalisation de la différence inter-trame d'éléments d'image à transmettre en utilisant la différence inter-trame des éléments d'image adjacents délivrée par les mémoires (816);

ledit codeur de quantification vectorielle (814) comprend des diviseurs (821) qui normalisent la différence inter-trame des éléments d'image à transmettre, par les amplitudes délivrées par les calculateurs d'amplitude (818);

ledit codeur de quantification vectorielle (814) et ledit décodeur de quantification vectorielle (828) comprennent des multiplieurs (827) qui multiplient la différence inter-trame décodée et normalisée par les amplitudes délivrées par les calculateurs d'amplitude (818); et

ledit codeur de quantification vectorielle (814) comprend un détecteur de mouvement (820) qui décide que les nouveaux éléments d'image n'ont pas varié de manière significative par rapport aux éléments d'image correspondants de la trame en avance d'un cycle de trame lorsque la différence inter-trame des éléments d'image adjacents délivrée par les mémoires (814) et la différence inter-trame des nouveaux éléments d'image sont proches de zéro, décide que les nouveaux éléments d'image ont varié de manière significative par rapport aux éléments d'image adjacents correspondant de la trame en avance d'un cycle de trame lorsque la différence inter-trame des éléments d'image adjacents et la différence inter-trame des nouveaux éléments d'image ne sont pas proches de zéro et soumet la différence inter-trame des nouveaux éléments d'image à une quantification vectorielle lorsque le détecteur de mouvement décide que les nouveaux éléments d'image ont varié de manière significative.

FIG. 1

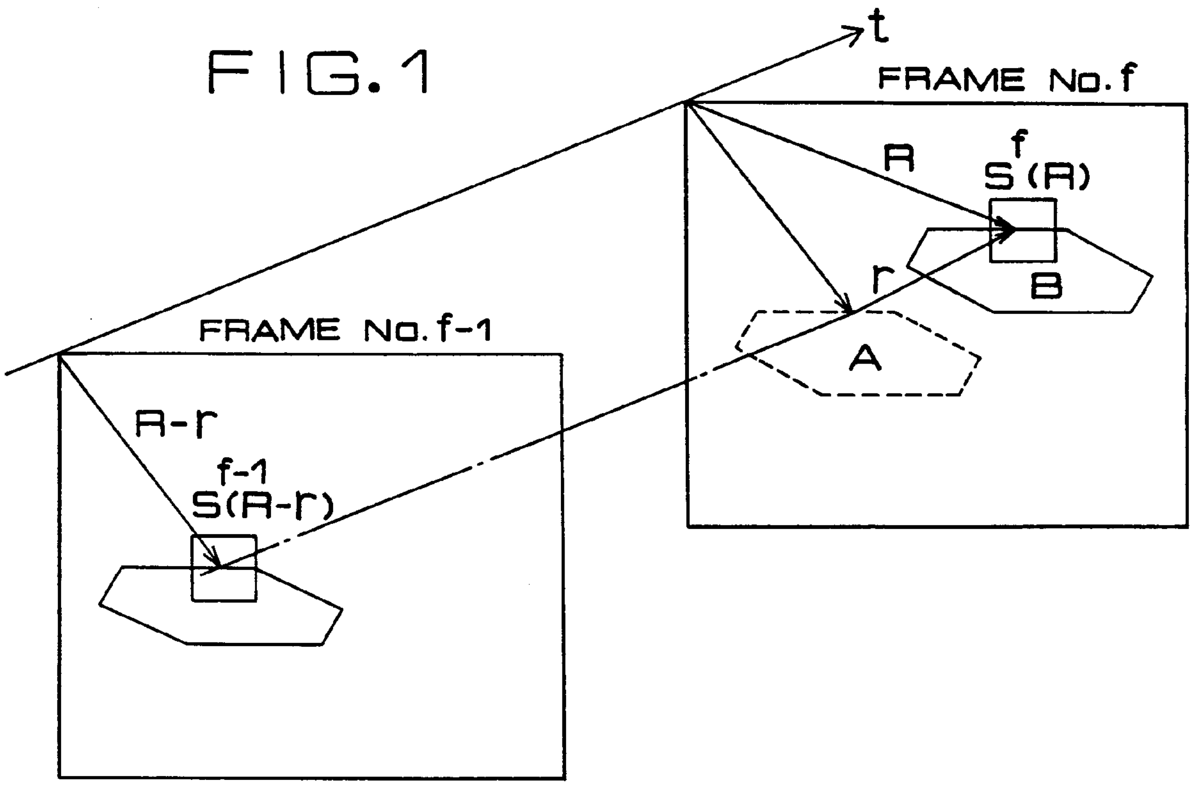
t
FRAME No. f
R
$S^f(R)$
r
B
A
FRAME No. f-1
R-r
$S^{f-1}(R-r)$

FIG. 2

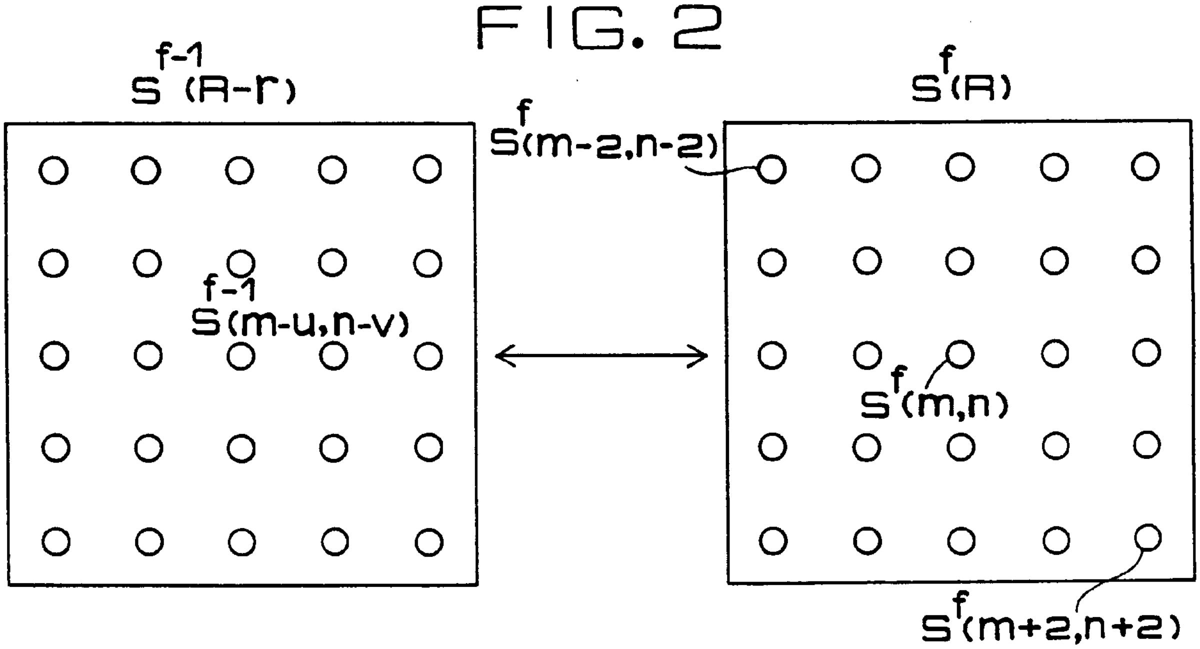
$S^{f-1}(R-r)$
$S^f(R)$
$S^f(m-2,n-2)$
$S^{f-1}(m-u,n-v)$
$S^f(m,n)$
$S^f(m+2,n+2)$

FIG. 3 (PRIOR ART)

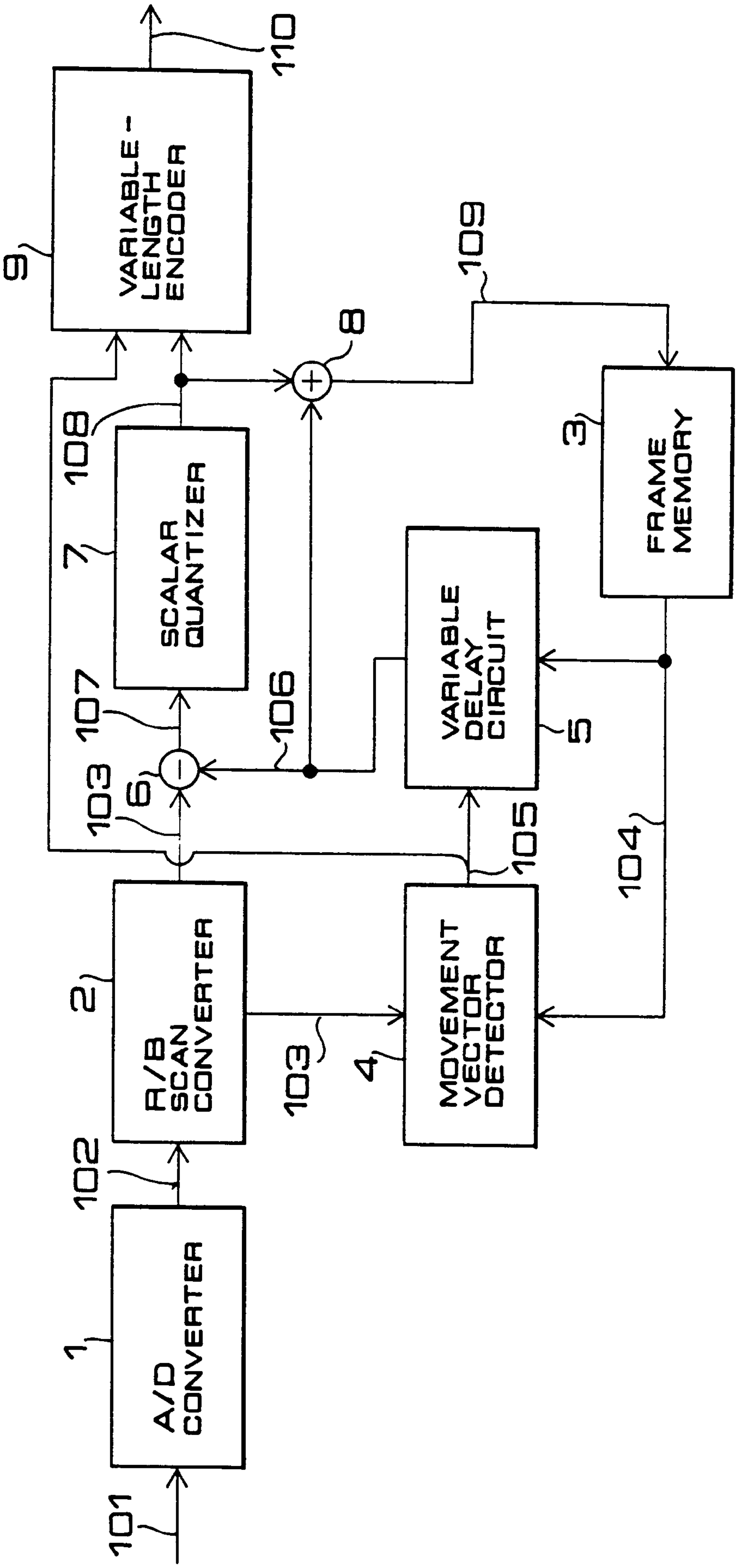

FIG. 4

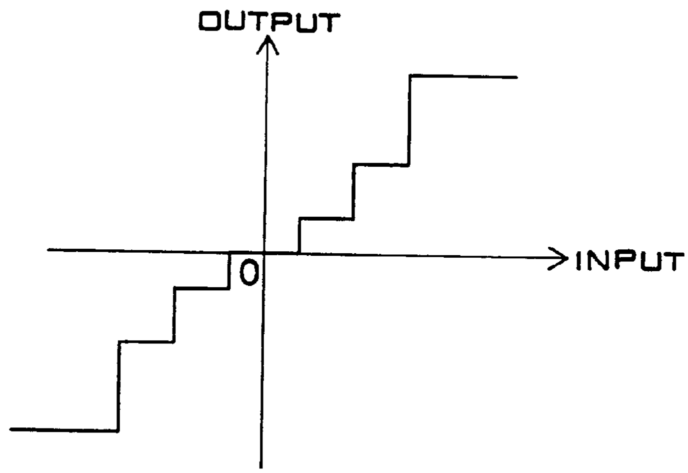


FIG. 5
(PRIOR ART)

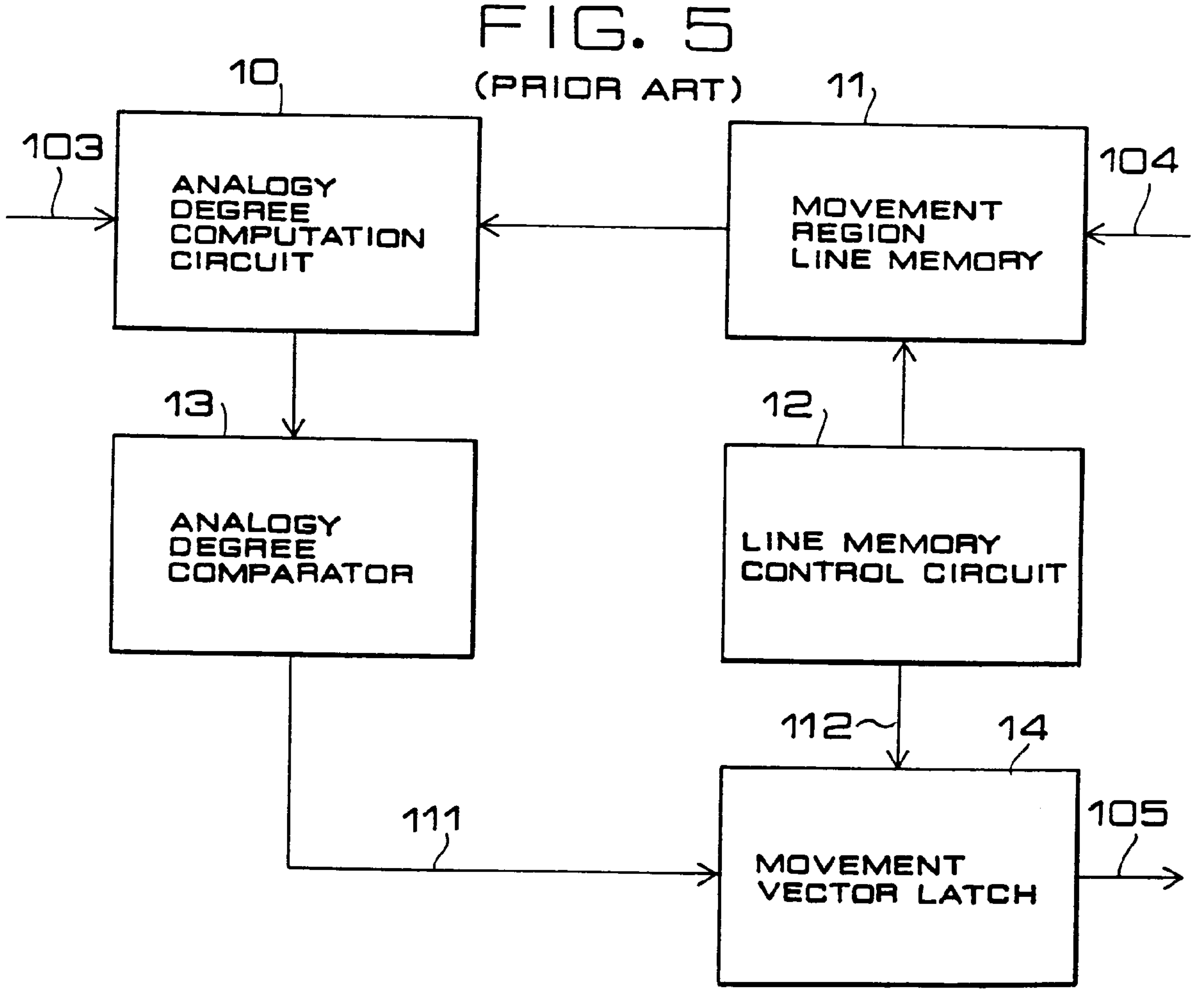

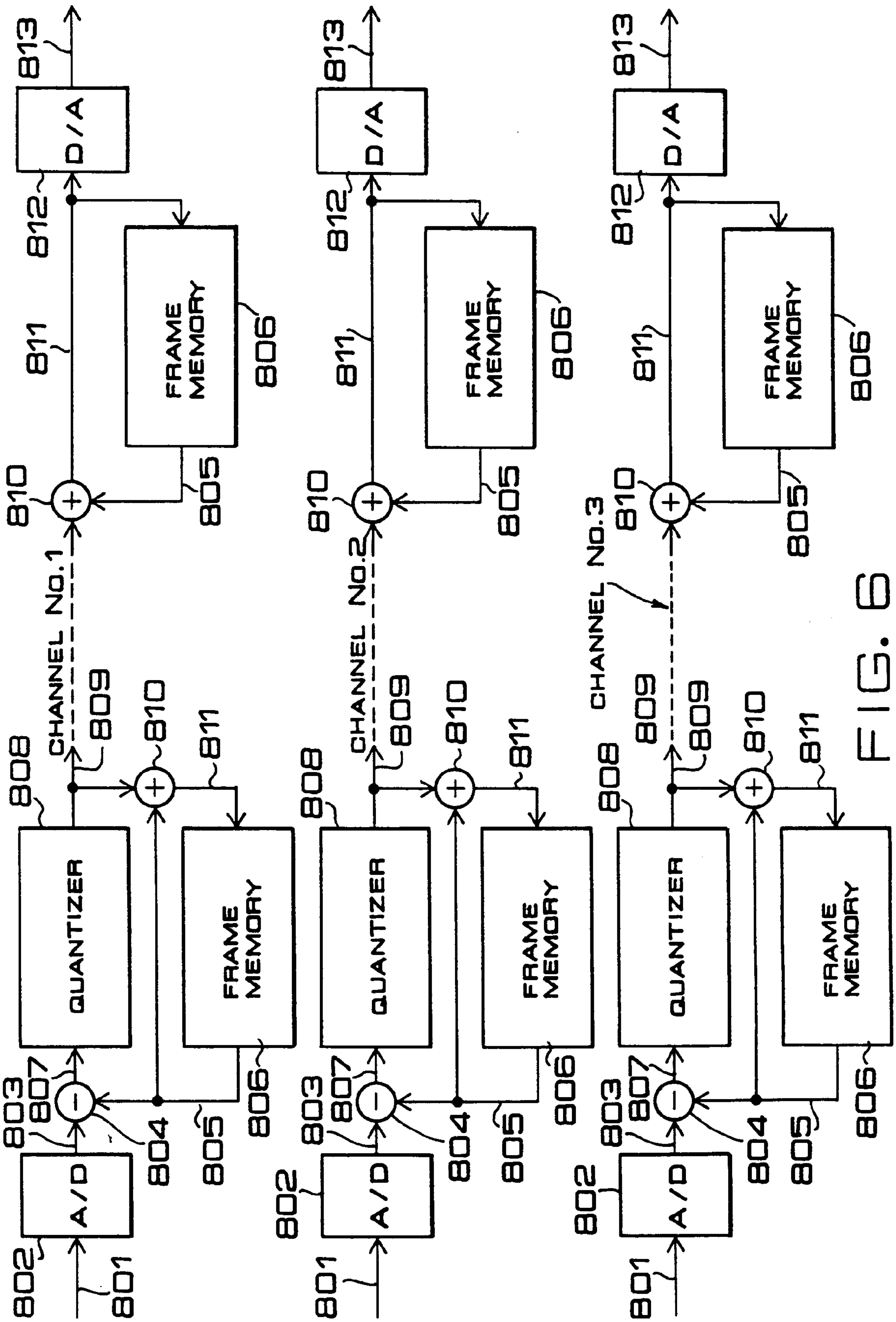
A/D
QUANTIZER
FRAME MEMORY
D/A
CHANNEL No.1
CHANNEL No.2
CHANNEL No.3
801
802
803
804
805
806
807
808
809
810
811
812
813

FIG. 6

FIG. 7

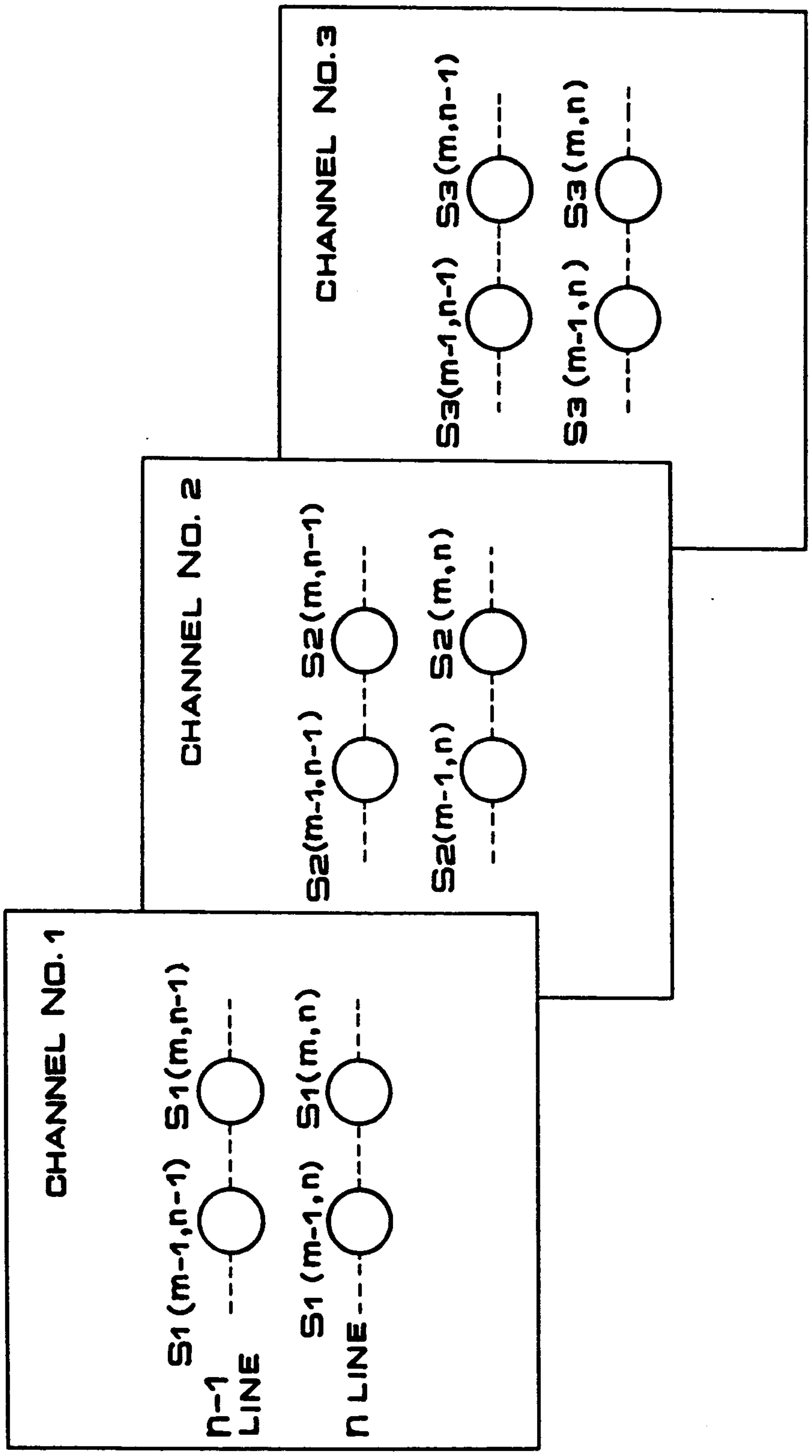
CHANNEL NO.3
S3(m-1,n-1)
S3(m,n-1)
S3 (m-1,n)
S3(m,n)
CHANNEL NO. 2
S2(m-1,n-1)
S2(m,n-1)
S2(m-1,n)
S2(m,n)
CHANNEL NO.1
n-1 LINE
S1 (m-1,n-1)
S1(m,n-1)
n LINE
S1 (m-1,n)
S1(m,n)

FIG. 8

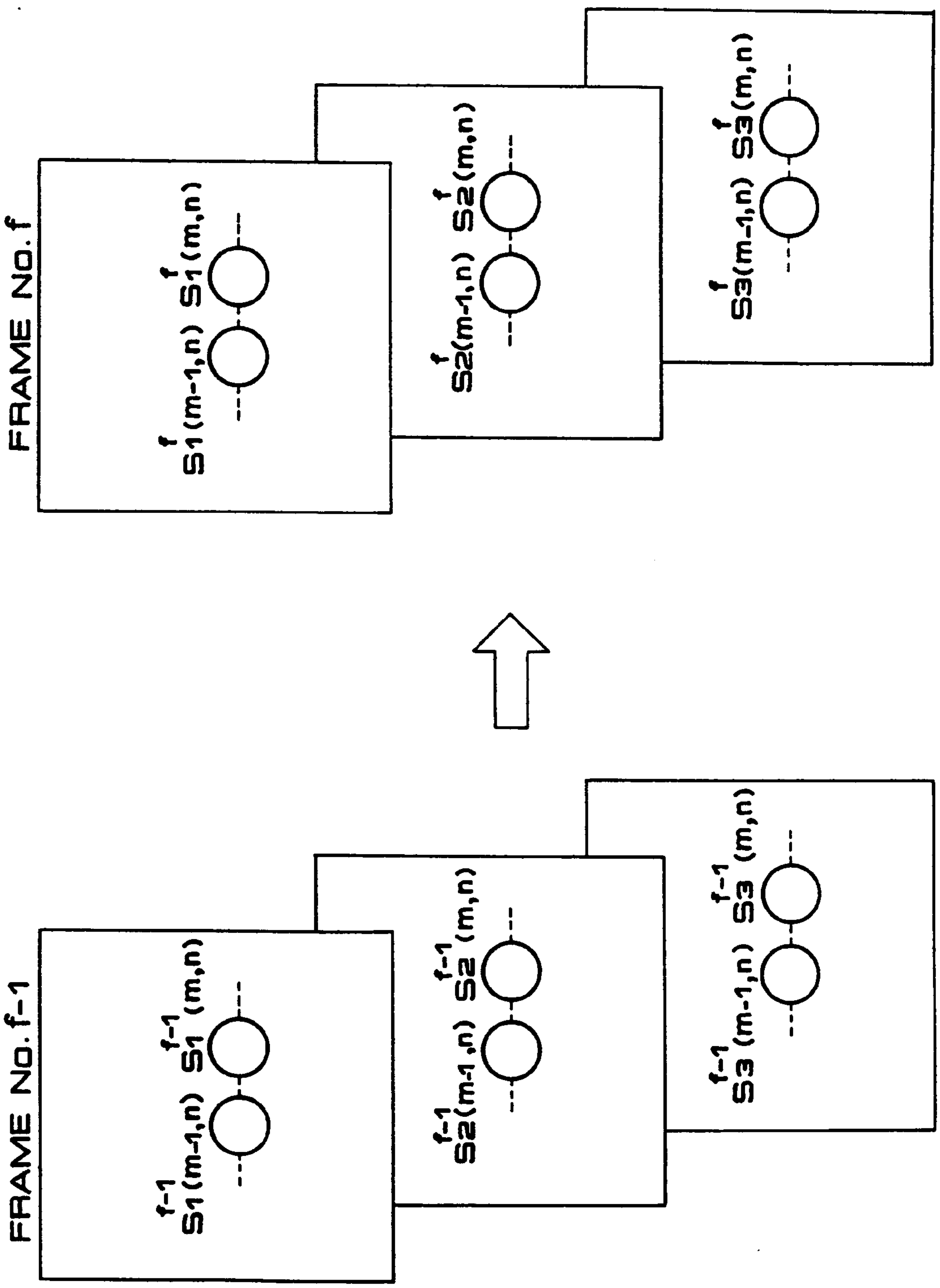
FRAME No. f
$S1^{f}(m-1,n)$
$S1^{f}(m,n)$
$S2^{f}(m-1,n)$
$S2^{f}(m,n)$
$S3^{f}(m-1,n)$
$S3^{f}(m,n)$
FRAME No. f-1
$S1^{f-1}(m-1,n)$
$S1^{f-1}(m,n)$
$S2^{f-1}(m-1,n)$
$S2^{f-1}(m,n)$
$S3^{f-1}(m-1,n)$
$S3^{f-1}(m,n)$

FIG. 9

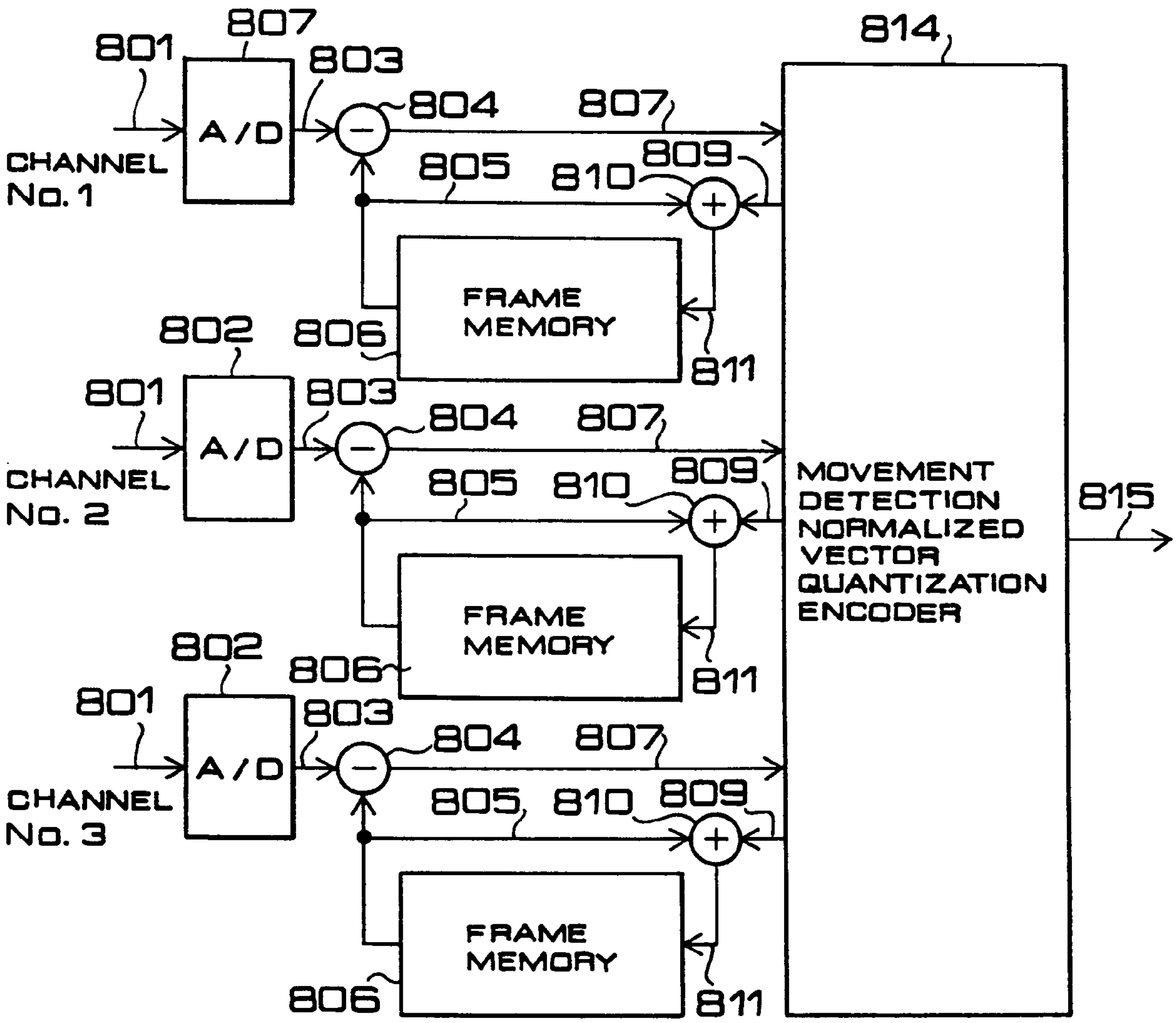
801
807
803
804
807
814
CHANNEL
No. 1
A / D
805
810
809
FRAME
MEMORY
802
806
811
801
803
804
807
CHANNEL
No. 2
A / D
805
810
809
MOVEMENT
DETECTION
NORMALIZED
VECTOR
QUANTIZATION
ENCODER
815
FRAME
MEMORY
802
806
811
801
803
804
807
CHANNEL
No. 3
A / D
805
810
809
FRAME
MEMORY
806
811

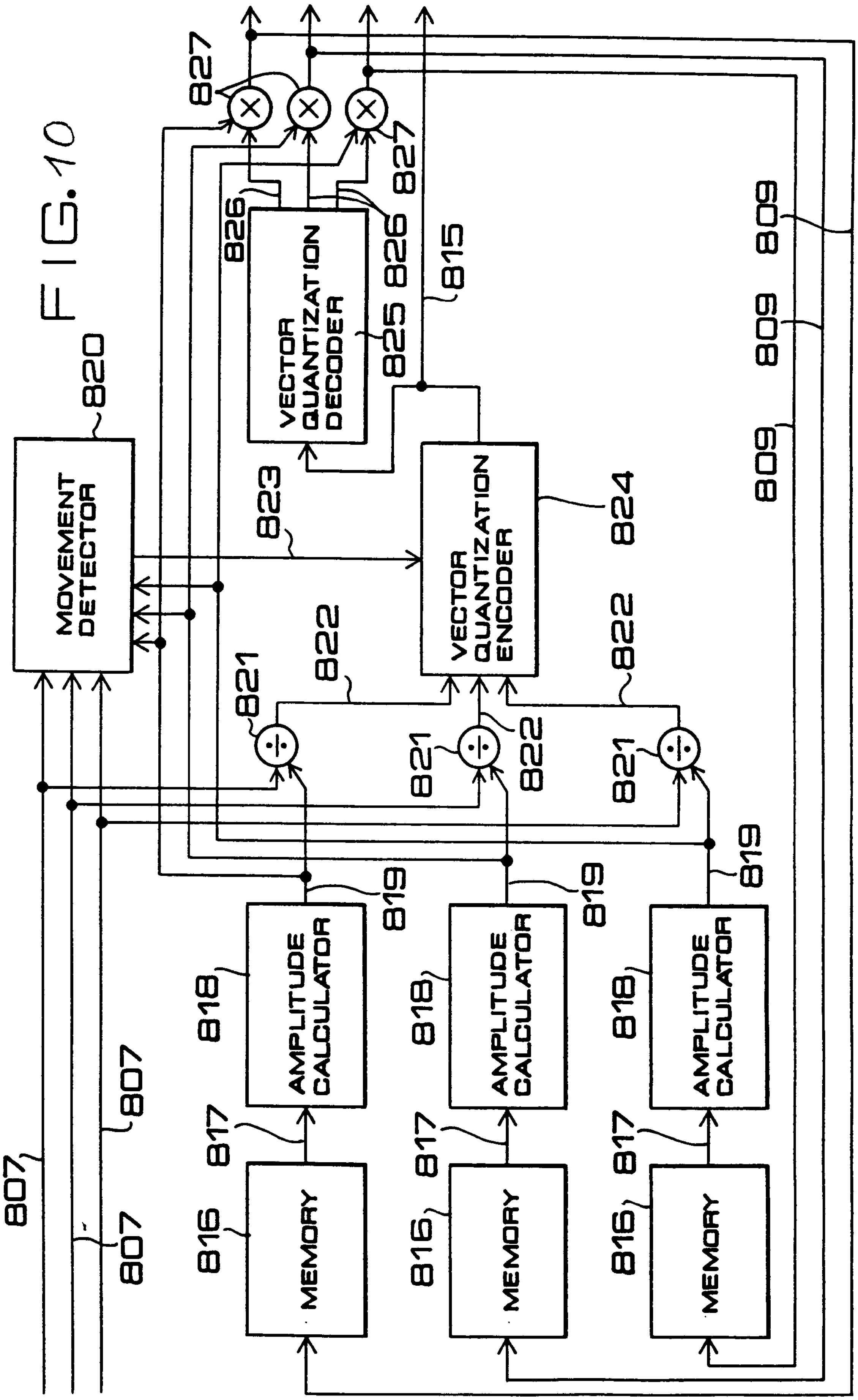
MOVEMENT DETECTOR
820
VECTOR QUANTIZATION DECODER
825
VECTOR QUANTIZATION ENCODER
824
AMPLITUDE CALCULATOR
AMPLITUDE CALCULATOR
AMPLITUDE CALCULATOR
MEMORY
MEMORY
MEMORY
807
809
815
816
817
818
819
821
822
823
826
827

FIG. 10

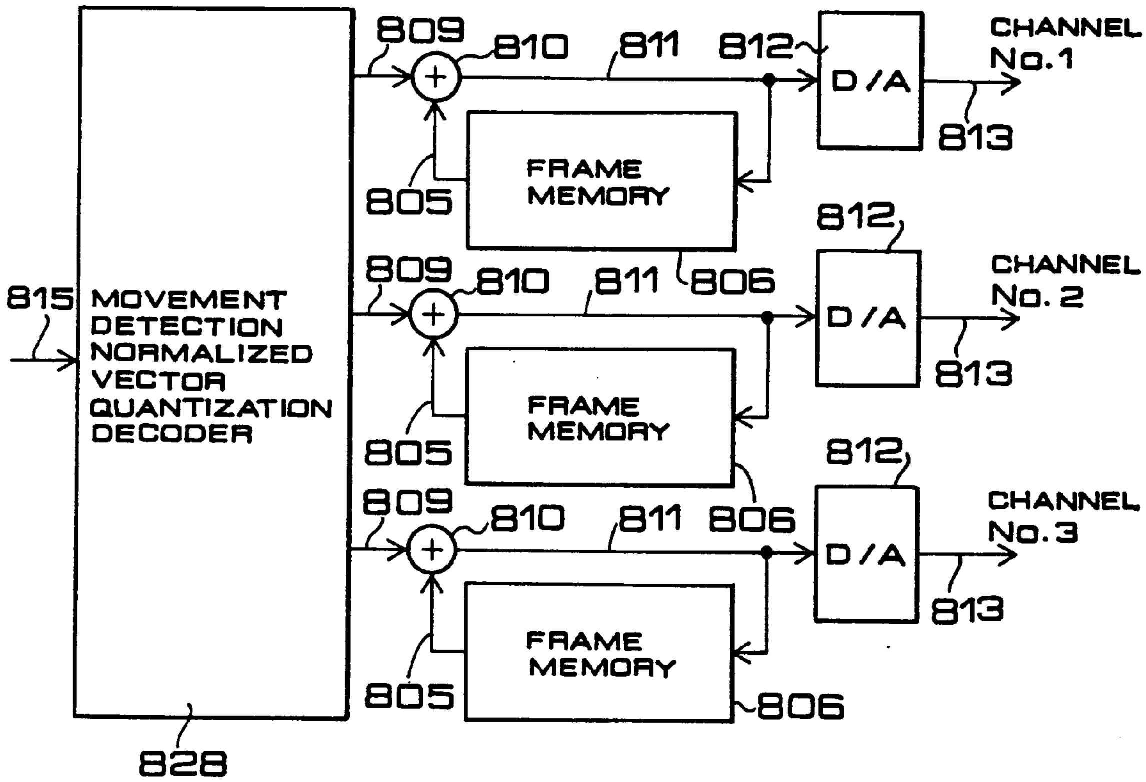
809
810
811
812
D/A
CHANNEL No. 1
813
FRAME MEMORY
805
806
815
MOVEMENT DETECTION NORMALIZED VECTOR QUANTIZATION DECODER
CHANNEL No. 2
CHANNEL No. 3
828

FIG. 11

FIG. 13

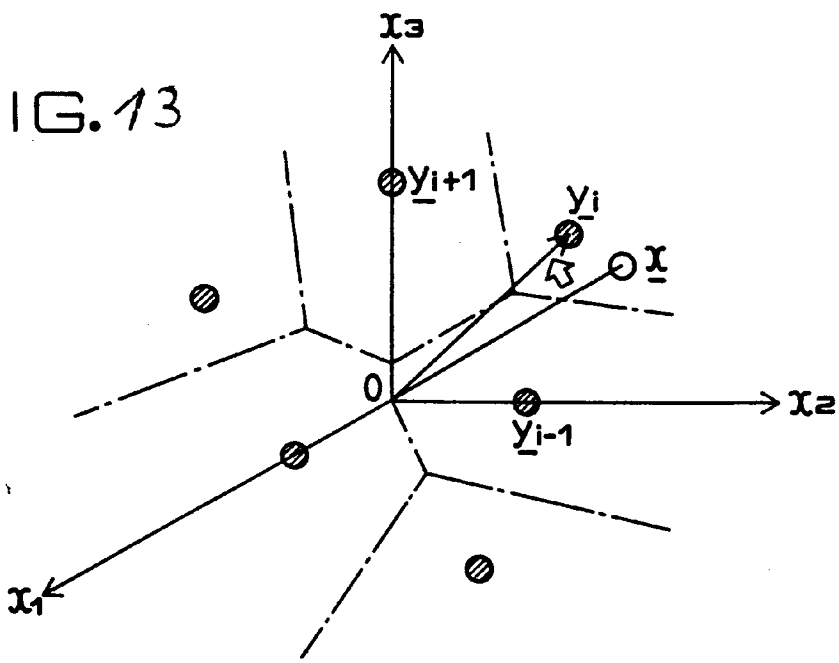
x3
yi+1
yi
x
0
x2
yi-1
x1

FIG. 12

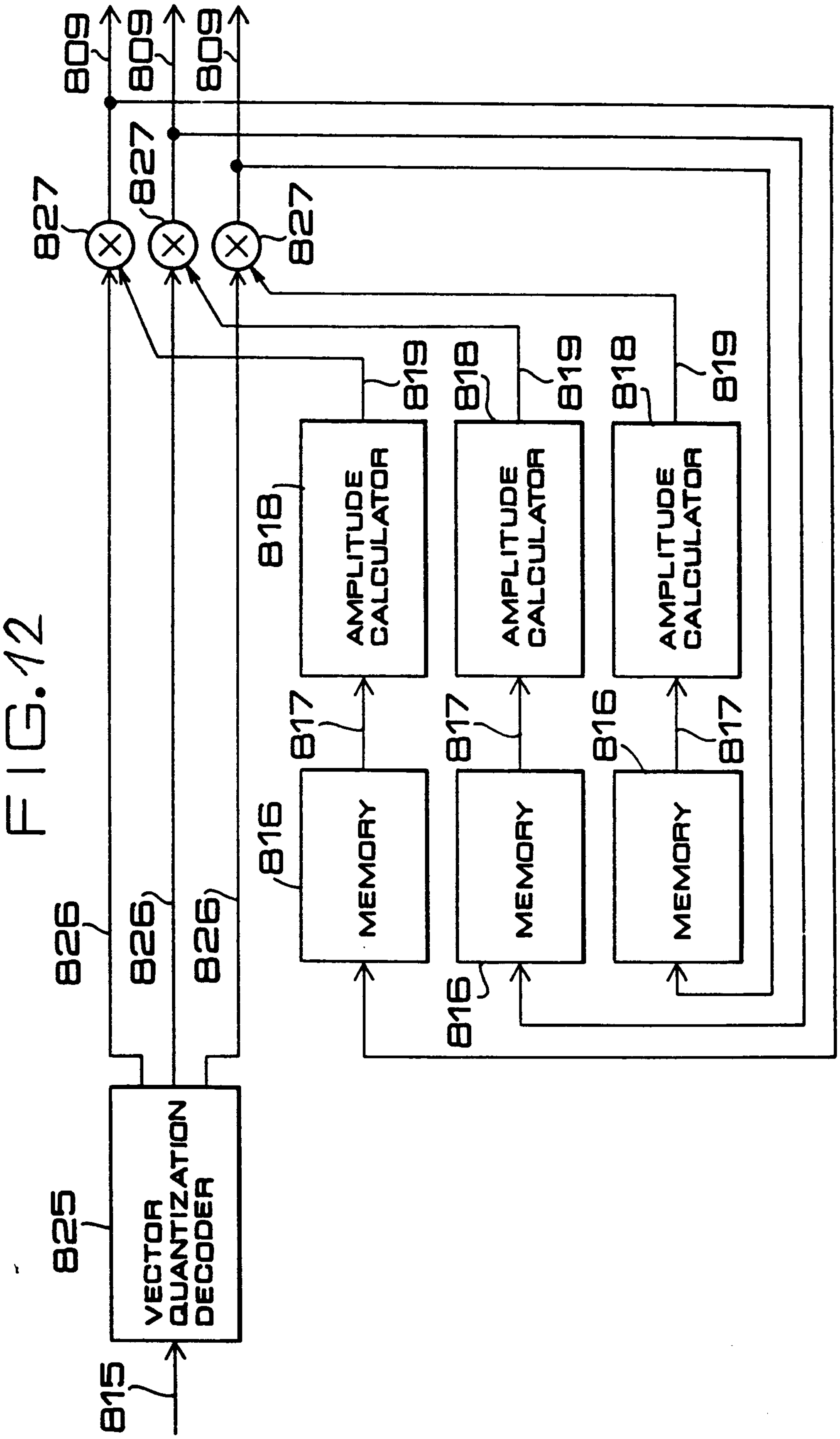
815
VECTOR QUANTIZATION DECODER
825
826
826
826
MEMORY
MEMORY
MEMORY
816
816
816
817
817
817
AMPLITUDE CALCULATOR
AMPLITUDE CALCULATOR
AMPLITUDE CALCULATOR
818
818
818
819
819
819
827
827
827
809
809
809